# EUROPÄISCHE PATENTSCHRIFT

(11) **EP 0 955 213 B1**
(45) Veröffentlichungstag und Bekanntmachung des Hinweises auf die Patenterteilung: **06.11.2002**
(21) Anmeldenummer: 99107091.3
(22) Anmeldetag: 12.04.1999
(51) Int. Cl.: B60R 21/16

(54) **Aufblasbares Kopfschutzsystem für den Seitenbereich eines Kraftfahrzeugs**
Inflatable head protection system for the side region of a vehicle
Dispositif gonflable de protection de la tête pour la zone latérale d'un véhicule

(30) Priorität: 08.05.1998 DE 19820568
(43) Veröffentlichungstag der Anmeldung: 10.11.1999
(73) Patentinhaber: Bayerische Motoren Werke Aktiengesellschaft, 80788 München (DE)
(72) Erfinder: Stavermann, Jörg, 80331 München (DE)

(56) Entgegenhaltungen:
- EP-A- 0 847 904
- EP-A- 0 849 129
- DE-A- 4 307 175
- GB-A- 2 278 812
- US-A- 5 588 672
- US-A- 5 605 346
- PATENT ABSTRACTS OF JAPAN vol. 098, no. 001, 30. Januar 1998 (1998-01-30) & JP 09 249089 A (TOKAI RIKA CO LTD), 22. September 1997 (1997-09-22)

## Beschreibung

Die Erfindung betrifft ein aufblasbares Kopfschutzsystem für den Seitenbereich eines Personenkraftwagens, bestehend aus einem sich von den Vordersitzen bis zu den Rücksitzen erstreckenden kissenartigen Luftsack, der am Dachholm und an der A-Säule und der C-Säule der Fahrzeug-Karosse befestigt ist, wobei der Luftsack im nicht aufgeblasenen Zustand gefaltet und verdeckt angeordnet ist und im aufgeblasenen Zustand den Kopfbereich der Insassen sowohl auf dem Vorder- als auch auf dem Rücksitzen abdeckt.

Ein derartiges aufblasbares Kopfschutzsystem ist in der DE 196 12 228 A1 beschrieben. Bei diesem bekannten aufblasbaren Kopfschutzsystem weist der Luftsack nur eine Kammer auf, und sein vorderer und hinterer Befestigungspunkt befindet sich ungefähr auf der halben Höhe der A-Säule bzw. der C-Säule der Fahrzeug-Karosse.

Ein solches aufblasbares Kopfschutzsystem muß mehreren Anforderungen genügen. Einerseits soll sich der Luftsack im nicht aufgeblasenen Zustand in Teilen der Fahrzeug-Karosse verdeckt anordnen lassen, wogegen er im aufgeblasenen Zustand möglichst weit nach unten reichen soll, um den Kopf der Insassen optimal zu schützen. Eine weitere wichtige Forderung hinsichtlich der Schutzfunktion besteht darin, daß der Luftsack im Ernstfall bereits vor dem Aufblasen in eine bestimmte Position gebracht werden muß, d. h. der Luftsack muß vor dem Aufblasen in Längsrichtung des Fahrzeugs gespannt werden. Damit der Luftsack im aufgeblasenen Zustand im wesentlichen vollflächig verspannt ist und Querkräfte optimal aufnehmen kann, sollten sich seine Befestigungspunkte möglichst nahe an den Randbereichen desselben befinden.

Der Erfindung liegt die Aufgabe zugrunde, ein gattungsgemäßes aufblasbares Kopfschutzsystem zu schaffen, bei dem der Luftsack im nicht aufgeblasenen Zustand in Teilen der Fahrzeug-Karosse verdeckt angeordnet werden kann und im Ernstfall unmittelbar vor dem Aufblasen vollflächig verspannt wird.

Erfindungsgemäß wird diese Aufgabe dadurch gelöst, daß an der A-Säule oder an der C-Säule eine sich längs derselben erstreckende Führungseinrichtung angebracht ist, daß der Luftsack mit einem Gleitelement an der Führungseinrichtung beweglich befestigt ist, daß sich das Gleitelement im nicht aufgeblasenen gefalteten Zustand des Luftsackes am oberen Ende der Führungseinrichtung befindet, daß im unteren Bereich der Führungseinrichtung eine Arretierung für das Gleitelement vorgesehen ist, die eine Rückkehr des Gleitelementes nach oben verhindert, und daß der Luftsack in mindestens zwei Kammern unterteilt ist, wobei eine Kammer der Führungseinrichtung benachbart ist und näherungsweise parallel zu dieser verläuft und Maßnahmen getroffen sind, daß sich diese Kammer im Ernstfall zuerst füllt.

Im nicht aufgeblasenen Zustand kann der gefaltete Luftsack ohne Schwierigkeiten in der Säule des Fahrzeugs, an der er befestigt ist und im Dachholm angeordnet werden. Wenn bei einem Unfall der Gasgenerator gezündet wird, dann füllt sich zunächst die der Führungseinrichtung benachbarte Kammer des Luftsackes. Dies hat zur Folge, daß das an dieser Kammer des Luftsackes befestigte Gleitelement auf der Führungseinrichtung nach unten bewegt wird, bis es mit der Arretierung in Eingriff gelangt. In diesem Zustand ist der Luftsack vollflächig gespannt und nimmt eine definierte Lage ein. Wenn der Luftsack sodann vollständig aufgeblasen wird, dann kann er Querkräfte aufnehmen, weil er nahe seinen Randbereichen mit der Karosse des Fahrzeugs fest verbunden ist.

Vorzugsweise ist dem Luftsack ein einziger Gasgenerator zugeordnet, der mit der Kammer, die der Führungseinrichtung benachbart ist, verbunden ist, wobei diese Kammer über eine Überströmöffnung mit der oder den übrigen Kammern verbunden ist. Durch diese Maßnahme wird erreicht, daß sich die der Führungseinrichtung benachbarte Kammer zuerst füllt.

Bei einer in konstruktiver Hinsicht besonders vorteilhaften Ausführungsform der Erfindung ist vorgesehen, daß die Führungseinrichtung aus einer Stange besteht, und daß das Gleitelement aus einer die Stange umgreifenden Schlaufe besteht. Die Arretierung für das Gleitelement kann auf einfache Weise dadurch erreicht werden, daß die Stange im unteren Bereich S-förmig gebogen ist und eine die Schlaufe in der Gebrauchsstellung des Luftsackes arretierende Nase aufweist.

Ein Ausführungsbeispiel der Erfindung ist in der Zeichnung dargestellt und wird nachfolgend näher erläutert. Es zeigt:
Fig. 1 die Ansicht des Seitenbereiches eines Personenkraftwagen-Innenraumes mit einem Kopfschutzsystem im aufgeblasenen Zustand, und

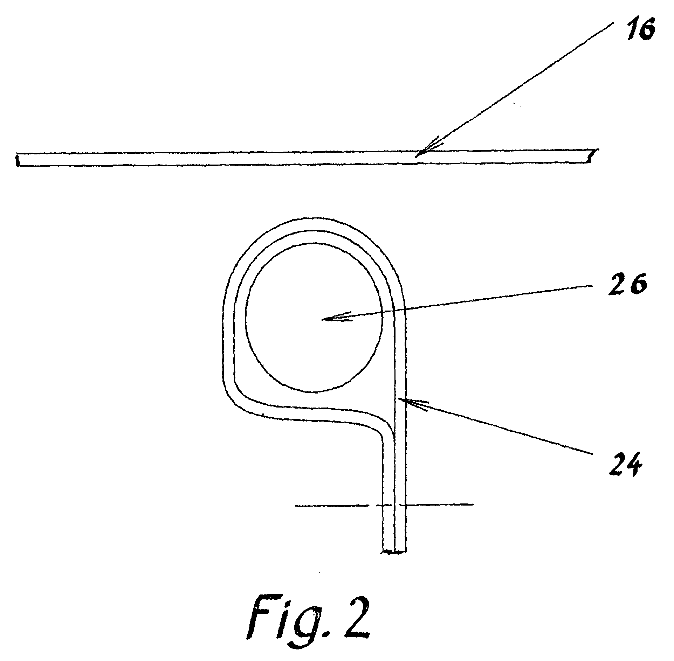

Fig. 2 in größerem Maßstab einen Schnitt nach der Linie II-II in Fig. 1.

Mit der Bezugsziffer 10 ist eine Luftsack bezeichnet, der im aufgeblasenen Zustand dargestellt ist und dabei als Kopfschutzsystem für den Seitenbereich eines Personenkraftwagen dient. Dieser Luftsack 10 schützt dabei sowohl den Kopf von Fahrzeuginsassen, die sich auf den Vordersitzen des Fahrzeugs befinden als auch den Kopf von Fahrzeuginsassen, die sich auf dem Rücksitz befinden.

Der Personenkraftwagen weist wie üblich eine A-Säule 12 , ein B-Säule 14 und eine C-Säule 16 sowie einen Dachholm 18 auf. Der Luftsack 10 ist zumindest an den Enden des Dachholms 18 an zwei Befestigungspunkten 20 und 21 befestigt. Das vordere untere Ende des Luftsackes 10 ist im unteren Bereich der A-Säule 12 an einem Befestigungspunkt 22 befestigt. Am unteren hinteren Ende des Luftsackes ist eine Schlaufe 24 befestigt. Diese Schlaufe 24 umgreift eine an der C-Säule 16 befestigte Führungsstange 26. Die Führungsstange 26 erstreckt sich entlang der geneigten C-Säule 16 nach unten, und sie ist im unteren Bereich S-förmig gebogen und weist eine die Schlaufe 24 des Luftsackes 10 arretierende Nase 28 auf. Der Luftsack 10 ist nahe der Führungsstange 26 mit einer zu dieser parallelen Trennaht 30 versehen. Diese Trennaht beginnt am oberen Rand des Luftsackes 10 und endet kurz vor seinem unteren Rand. Durch diese Trennaht 30 ist der Luftsack 10 in eine kleine Kammer 32 und eine große Kammer 34 unterteilt, die über eine Überströmöffnung 36 miteinander in Verbindung stehen. Im Dachholm 18 ist ein Gasgenerator 38 angeordnet, der über einen Luftschlauch mit der kleinen Kammer 32 des Luftsackes 10 verbunden ist.

Im nicht aufgeblasenen Zustand wird der Luftsack 10 gefaltet und gerafft, so daß sich seine Schlaufe 24 nahe dem oberen Ende der Führungsstange 26 befindet. In diesem Zustand kann der Luftsack 10 ohne Schwierigkeiten im Dachholm 18 und in der A-Säule 12 untergebracht und verborgen werden. Wenn der Gasgenerator 38 bei einem Unfall gezündet wird, dann wird zunächst die mit diesem verbundene kleine Kammer 32 mit Gas gefüllt. Der Luftsack 10 wird daher durch einen Längsschlitz aus dem Dachholm 18 herausgezogen, und seine Schlaufe 24 gleitet auf der Führungsstange 26 nach unten, bis sie hinter der Nase 28 einrastet. In diesem Zustand ist der lediglich im Bereich der kleinen Kammer 32 gefüllte Luftsack 10 in einem gespannten Zustand in einer definierten Lage gehalten, weil er an allen vier Eckpunkten festgelegt ist. Wenn sodann das Gas von der kleinen Kammer 32 durch die Überströmöffnung 36 in die große Kammer 34 strömt, dann wird der Luftsack 10 in einer stabilen Lage aufgeblasen, so daß er Querkräfte zuverlässig aufnehmen kann. Die Insassen des Fahrzeugs sind daher im Kopfbereich optimal geschützt. Da die Befestigungspunkte 22 und 28 des Luftsackes 10 im unteren Bereich der A-Säule 12 bzw. der C-Säule 16 angeordnet sein können, reicht der Luftsack 10 weit nach unten, so daß auch kleine Insassen des Fahrzeugs im Kopfbereich gegen Querkräfte geschützt sind.

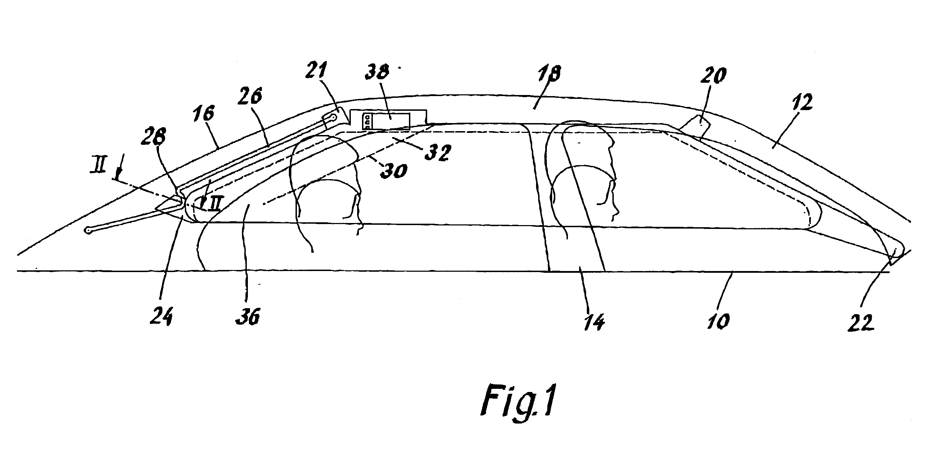

Der Luftsack 10 kann auf einfache Weise aus einem Zuschnitt hergestellt werden, der zu dem unteren Längsrand des Luftsackes 10 symmetrisch ausgebildet ist. Dieser Zuschnitt wird um seine Symmetrielinie umgefaltet, und die freien Ränder werden miteinander vernäht. Sodann werden die beiden Lagen des Zuschnitts entlang der in Fig. 1 mit der Bezugsziffer 30 bezeichneten unterbrochenen Linie miteinander vernäht, um die beiden Kammern 32 und 34 und die Überströmöffnung 36 zu begrenzen.

Abweichend von dem gezeigten Ausführungsbeispiel wäre es auch möglich, die Führungsstange 26 im Bereich der A-Säule 12 eines Personenkraftwagens anzuordnen und das hintere untere Ende des Luftsackes 10 an der C-Säule 16 starr zu befestigen. Eine solche Variante kann bei einem Personenkraftwagen mit sehr steiler C-Säule von Vorteil sein.

## Patentansprüche

1. Aufblasbares Kopfschutzsystem für den Seitenbereich eines Personenkraftwagens, bestehend aus einem sich von den Vordersitzen bis zu den Rücksitzen erstreckenden kissenartigen Luftsack, der am Dachholm und an der A-Säule und der C-Säule der Fahrzeug-Karosse befestigt ist, wobei der Luftsack im nicht aufgeblasenen Zustand gefaltet und verdeckt angeordnet ist und im aufgeblasenen Zustand den Kopfbereich der Insassen sowohl auf den Vorder- als auch auf den Rücksitzen abdeckt, **dadurch gekennzeichnet, daß** an der A-Säule (12) oder an der C-Säule (16) eine sich längs derselben erstreckende Führungseinrichtung (26) angebracht ist, daß der Luftsack (10) mit einem Gleitelement (24) an der Führungseinrichtung (26) beweglich befestigt ist, daß sich das Gleitelement (24) im nicht aufgeblasenen gefalteten Zustand des Luftsackes (10) am oberen Ende der Führungseinrichtung (26) befindet, daß im unteren Bereich der Führungseinrichtung (26) eine Arretierung (28) für das Gleitelement (24) vorgesehen ist, die eine Rückkehr des Gleitelements nach oben verhindert, und daß der Luftsack 10 in mindestens zwei Kammern (32, 34) unterteilt ist, wobei eine Kammer (32) der Führungseinrichtung (26) benachbart ist und näherungsweise parallel zu dieser verläuft und Maßnahmen getroffen sind, daß sich diese Kammer (32) im Ernstfall zuerst füllt.

2. Kopfschutzsystem nach Anspruch 1, **dadurch gekennzeichnet, daß** dem Luftsack (10) ein einziger Gasgenerator (38) zugeordnet ist, der mit der Kammer (32), die der Führungseinrichtung (26) benachbart ist, verbunden ist, und daß diese Kammer (32) über eine Überströmöffnung (36) mit der oder den übrigen Kammern (34) verbunden ist.

3. Kopfschutzsystem nach Anspruch 1 oder 2, **dadurch gekennzeichnet, daß** die Führungseinrichtung aus einer Stange (26) besteht und daß das Gleitelement aus einer die Stange umgreifenden Schlaufe (24) besteht.

4. Kopfschutzsystem nach Anspruch 3, **dadurch gekennzeichnet, daß** die Stange (26) im unteren Bereich S-förmig gebogen ist und eine die Schlaufe (24) in der Gebrauchsstellung des Luftsackes (10) arretierende Nase (28) aufweist.

5. Kopfschutzsystem nach einem der Ansprüche 1 bis 4, **dadurch gekennzeichnet, daß** die übrige Kammer (34) durch horizontale oder vertikale Nähte in weitere kleinere Kammer unterteilt ist.

## Claims

1. An inflatable head protection system for the side area of a passenger car, comprising a cushion-like airbag extending from the front seats to the back seats and fastened to the longitudinal roof member, the A-column and the C-column of the vehicle body, wherein the airbag in the non-inflated state is folded and concealed whereas in the inflated state it covers the head region of the occupants both on the front and on the back seats, **characterised in that** a guide device (26) extends along and is mounted on the A-column (12) or on the C-column (16), the airbag is fastened so as to be movable by a slide element (24) on the guide device (26), the slide element (24) is disposed at the top end of the guide device, (26) when the airbag (10) is in the non-inflated folded state, a locking means (28) in the lower region of the guide device (26) is provided for the slide element (24) and prevents the slide element returning upwards, and the airbag (10) is divided into at least two chambers (32, 34), one chamber (32) being near the guide device (26) and extending approximately parallel thereto, and steps are taken to ensure that the said chamber (32) fills first in an emergency.

2. A head protection system according to claim 1, **characterised in that** the airbag (10) is associated with a single gas generator (38) which is connected to the chamber (32) near the guide device (26), and the said chamber (32) is connected by an overflow opening (36) to the chamber or to the remaining chambers (34).

3. A head protection system according to claim 1 or claim 2, **characterised in that** the guide device comprises a rod (26) and the slide element comprises a loop (24) surrounding the rod.

4. A head protection system according to claim 3, **characterised in that** the rod (26) is S-shaped at the bottom and has a lug (28) which locks the loop (24) when the airbag (10) is in the operative position.

5. A head protection system according to any of claims 1 to 4, **characterised in that** the other chamber (34) is divided into other smaller chambers by horizontal or vertical seams.

## Revendications

1. Système gonflable de protection de la tête pour la zone latérale d'un véhicule de tourisme composé d'un coussin d'air s'étendant des sièges avant jusqu'aux sièges arrière, et fixé au longeron de toit et à la colonne (A) ainsi qu'à la colonne (C) de la carrosserie du véhicule,
le coussin d'air étant plié et caché à l'état non gonflé tandis qu'à l'état gonflé, il couvre la zone de tête des occupants à la fois du siège avant et du siège arrière,
**caractérisé en ce qu'**
une installation de guidage (26) est reliée à la colonne A (12) ou à la colonne C (16) en s'étendant le long de celles-ci,
le coussin d'air (10) est fixé de manière mobile par un élément de glissement (24) à l'installation de guidage (26),
l'élément de glissement (24) se trouve à l'extrémité supérieure de l'installation de guidage (26) lorsque le coussin d'air (10) est plié et non gonflé,
un dispositif de blocage (28) est prévu pour l'élément de glissement (24) dans la zone inférieure de l'installation de guidage (26), ce dispositif de blocage interdisant une remontée de l'élément de glissement, et
le coussin d'air (10) est subdivisé en au moins deux chambres (32, 34), une chambre (32) étant voisine de l'installation de guidage (26) sensiblement parallèlement à celle-ci et des moyens étant prévus pour que cette chambre (32) se remplisse d'abord en cas d'incident.

2. Système de protection de tète selon la revendication 1,
**caractérisé en ce qu'**
un unique générateur de gaz (38) est associé au coussin d'air (10), ce générateur étant relié à la chambre (32) voisine de l'installation de guidage (26), et
cette chambre (32) est reliée à l'autre ou aux autres chambres (34) par un orifice de passage (36).

3. Système de protection de la tête selon les revendications 1 et 2,
**caractérisé en ce que**
l'installation de guidage se compose d'une tige (26) et l'élément de glissement comprend une boucle (24) entourant la tige.

4. Système de protection de la tête selon la revendication 3,
**caractérisé en ce que**
la tige (26) est recourbée en forme de (S) dans sa zone inférieure et comporte un bec (28) qui arrête la boucle (24) en position de mise en oeuvre du coussin gonflable (10).

5. Système de protection de la tête selon l'une quelconque des revendications 1 à 4,
**caractérisé en ce que**
l'autre chambre (34) est subdivisée en d'autres petites chambres par une soudure horizontale ou verticale.
